# EUROPÄISCHE PATENTANMELDUNG

(11) **EP 1 770 926 A2**
(43) Veröffentlichungstag der Anmeldung: **04.04.2007**
(21) Anmeldenummer: 06120171.1
(22) Anmeldetag: 06.09.2006
(51) Int. Cl.: H04L 12/56

(54) **Verfahren zum Auffinden günstiger Link-Kostenmetriken nach Netzwerkfehler**

(30) Priorität: 28.09.2005 DE 102005046396
(71) Anmelder: SIEMENS AKTIENGESELLSCHAFT, 80333 München (DE); Fraunhofer-Gesellschaft zur Förderung der angewandten Forschung e.V., 80686 München (DE)
(72) Erfinder: Charzinski, Joachim, 81825, München (DE); Reichert, Christoph, 10589, Berlin (DE)
(74) Vertreter: Berg, Peter

(57) **Zusammenfassung**

Erfindungsgemäß wird zur Optimierung von Link-Kostenmetriken in einem Datenpakete nach dem Internet-Protokoll übertragenden Netzwerk, das mit Netzknoten und diese verbindende Links gebildet ist, vorgeschlagen, die maximale relative Linkauslastung zu verwenden, die in einem beliebigen Fehlermuster aus einer Liste vorgegebener Fehlermuster beobachtet wird und die Kostenmetriken für Multi-Path Routing zu optimieren. Multi-Path Routing erzielt in der Regel bessere Ergebnisse als das bislang verwendete Single-Path Routing. Zudem erlaubt der Einschluss von bestimmten Fehlerszenarien eine bessere Abstimmung auf die Anforderungen eines Betreibers.

## Beschreibung

Der Anmeldungsgegenstand betrifft ein Verfahren zum Auffinden günstiger Link-Kostenmetriken in einem Datenpakete nach dem Internet-Protokoll übertragenden Netzwerk mit den Merkmalen des Anspruchs 1.

IP-Netze bestimmen mit Hilfe verteilter bzw. replizierter Routing-Algorithmen (z.B. im Routing-Protokoll Open Shortest Path First OSPF [J. Moy, "OSPF Version 2", RFC 2328, http://www.ietf.org/rfc/rfc2328.txt] oder Intermediate-System-Intermediate-System IS-IS [R. Callon, "Use of OSI IS-IS for Routing in TCP/IP and Dual Environments", RFC 1195, http://www.ietf.org/rfc/rfc1185.txt]) die Routing-Tabellen in den Routern. Die Länge der verschiedenen möglichen Pfade zu einem Ziel wird dabei als Summe der Link- bzw. InterfaceKostenmetriken auf den Pfaden bestimmt. Der nächste Knoten des kürzesten Pfades wird schließlich als "next hop" in die Routing-Tabelle für das entsprechende Ziel eingetragen. Werden mehrere gleich lange kürzeste Pfade ermittelt, so kann auch mit der Equal Cost Multi-Path (ECMP) Option von OSPF [RFC 2328 siehe oben] bestimmt werden, dass alle entsprechenden next-hop-Router in die Routing-Tabelle aufgenommen werden.

Um den Verkehr von Strecken mit hoher Verkehrsbelastung auf weniger stark belastete Strecken umzuleiten, wurde verschiedentlich vorgeschlagen, die Link- bzw. Interfacekostenmetriken im Netz nicht alle gleich zu wählen, sondern sie entsprechend dem Ergebnis einer vieldimensionalen Optimierung einzustellen [B. Fortz, M. Thorup, "Internet Traffic Engineering by Optimizing OSPF Weights", Proc. IEEE Infocom 2000, http://www.ieee-infocom.org/2000/papers/165.ps]. Es ist jedoch nicht sichergestellt, dass diese optimierten Metriken auch im Falle von Fehlern, wie z. B. einem Linkausfall oder einem Router-Ausfall, nach dem entsprechenden Rerouting noch zu geringeren Linkauslastungen führen als die Standard-Einstellung mit homogenen Metriken auf allen Links.

In der Regel werden Kostenmetriken in einem Netz alle auf denselben Wert oder auf den Kehrwert der Bandbreite gesetzt oder für den Gutfall (ohne Linkausfälle) optimiert. In [A. Nucci et al. "IGP Link Weight Assignment for Transient Link Failures". Proceedings of ITC 2003, Berlin, Germany, Sep. 2003, pp. 321-330] wird eine Optimierung mit Berücksichtigung von Linkausfällen für ein Tabu-Search-Verfahren für single-path-Routing beschrieben.

Der vorliegenden Erfindung liegt die Aufgabe zugrunde, das Routing von Datenpaketen in paketvermittelnden Kommunikationsnetzen zu verbessern.

Das Problem wird durch die Merkmale des Anspruchs 1 gelöst.

Multi-Path Routing erzielt in der Regel bessere Ergebnisse als das eingangs erwähnte single-path Routing. Außerdem erlaubt der Einschluss von bestimmten Fehlerszenarien eine bessere Abstimmung auf die Anforderungen eines Betreibers.

Nach einem Rerouting (z.B. nach Ausfall eines Links oder Routers) befindet sich das Netz bezüglich der Linklasten in einem bestmöglichen Zustand, ohne dass eine andere Reaktion auf den Fehler als die des Routing-Protokolls nötig wäre. Die Verwendung von Multi-Path routing erlaubt eine deutlich bessere Verringerung der Linkauslastungen als das übliche Single Path Routing. Die Anpassung der zu berücksichtigenden Szenarien an die Ausfallsicherheit und/oder Wichtigkeit der einzelnen Komponenten erlaubt eine weitere Optimierung.

Vorteilhafte Weiterbildungen des Anmeldungsgegenstandes sind in den Unteransprüchen angegeben.

Ein Ausführungsbeispiel der Erfindung wird anhand der Zeichnungen näher erläutert.

Dabei zeigen:
Fig 1 eine Anordnung eines paketvermittelnden Kommunikationsnetzes und
Fig 2 zehn sortierte Ergebnisse (maximale relative Linklast über alle Links und Fehlerfälle) der hier beschriebenen Optimierung für ein 20-Knoten-Netz.

Paketvermittelnde Kommunikationsnetze sind gebildet mit Netzknoten, wie Router, Switches, Netzelementen, Hubs, die untereinander durch Verbindungswege respektive Linkstrecken, Verbindungen, Leitungen, Links, Strecken, mindestens teilweise miteinander verbunden sind. In paketvermittelnden Kommunikationsnetzen werden Datenpakete respektive Pakete von einem Eingangs- oder Quellnetzknoten über Routingwege zu einem Ausgangs- oder Zielnetzknoten übertragen. Ein paketvermittelndes Kommunikationsnetz ist beispielsweise das Internet. Im Internet werden Routingprotokolle wie open shortest path first, kurz OSPF, oder Intermediate System - Intermediate System, kurz IS-IS, verwendet. Diese Routingprotokolle ermitteln zwischen Eingangs- und Ausgangsnetzknoten einen Routingweg respektive Routingpfad, Route oder Pfad. Um einen Routingpfad zu ermitteln wird jedem Verbindungsweg eine so genannte Kostenmetrik zugeordnet. Dies sind vergebene Kosten/Aufwand für den entsprechenden Verbindungsweg. Mit Hilfe dieser Kostenmetriken werden durch die Routingprotokolle kürzeste Routingpfade zwischen Eingangs- und Ausgangsnetzknoten im Sinne der Routingpfade mit der geringsten Kostensumme der Verbindungswege ermittelt. Falls es mehrere gleich gute Routingpfade oder Routingpfadabschnitte, d.h. Teilabschnitte des Routingpfades, gibt, wird beispielsweise mit Hilfe des equal cost multi-path Verfahren, kurz ECMP, der Datenpaketverkehr bzw. die Datenpakete auf mehrere gleich gute Pfade aufgeteilt.

Bei gegebenem Eingangsverkehr des Netzknotens kann mittels des Routingverfahrens vorhergesagt werden, wie viel Verkehr auf den Verbindungswegen auftreten wird. Diese Aussage ist bei einer unbekannten Auswahl des Verbindungsweges nicht möglich. Die Fähigkeit zur Vorhersage des Verkehrs auf den einzelnen Verbindungswegen zwischen den Netzknoten ist allerdings eine Grundvoraussetzung für Verfahren zur Optimierung der Verbindungsweg- bzw. Linklasten.

Die einfachste Art der Aufteilung von Datenpaketen respektive Datenpaketverkehr auf zwei gleich gute Verbindungswege geschieht paketweise im sogenannten Round-Robin-Verfahren. Dabei wird von einer Reihe von Paketen zum selben Ziel das erste an den ersten, das zweite an den zweiten, das dritte wieder an den ersten usw. Netzknoten bzw. Verbindungsweg weitergeleitet. Dadurch wird zwar sichergestellt, dass auf jeder der Verbindungswege die selbe Datenpaketrate übertragen wird, andererseits kann es im Falle unterschiedlicher Laufzeiten der Datenpakete auf den Verbindungswegen zu Paketüberholungen kommen. Diese sind in Übertragungsprotokollen, wie dem Internet Protokoll, kurz IP, nicht ausgeschlossen, führen allerdings trotzdem oft zu Performance Einbußen in den Anwendungen. Um die Reihenfolge zusammengehörender Datenpakete zu erhalten, wird für die Verteilung von Datenpaketen über Verbindungswege mit unterschiedlichen Laufzeit heute in der Regel ein Verfahren eingesetzt, das auf so genannten Hash-Funktionen basiert. Dabei wird aus Informationen aus dem Kopf des Datenpaketes, wie z. B. der Absender-/Ursprungs-/Quell- und der Empfänger/Zieladresse, beispielsweise die IP-Absender- und Empfängeradresse sowie gegebenenfalls Portnummern von Absender und Empfängern mittels Modulo 2 Addition mit Verschiebungen und Restbildung eine Integer-Zahl ermittelt. Diese Hash-Funktion liefert für alle Datenpakete mit der selben Ursprungs- und Zieladressen die selbe Integer-Zahl. Der durch die Hash-Funktion ermittelbare mögliche Integer-Zahlen Wertebereich wird auf die Anzahl der zu einem Ausgangs- bzw. Zielnetzknoten lokal zur Verfügung stehenden nächsten Netzknoten bzw. Verbindungswege abgebildet und der gesamte Verkehr zum Zielnetzknoten entsprechend dieser Abbildung aufgeteilt. Somit werden zusammen gehörende Pakete auf dem selben Routingweg bzw. Routingwegabschnitt weitergeleitet, ohne dass in den Netzknoten irgendwelche Zustandsinformationen gehalten werden müssten.

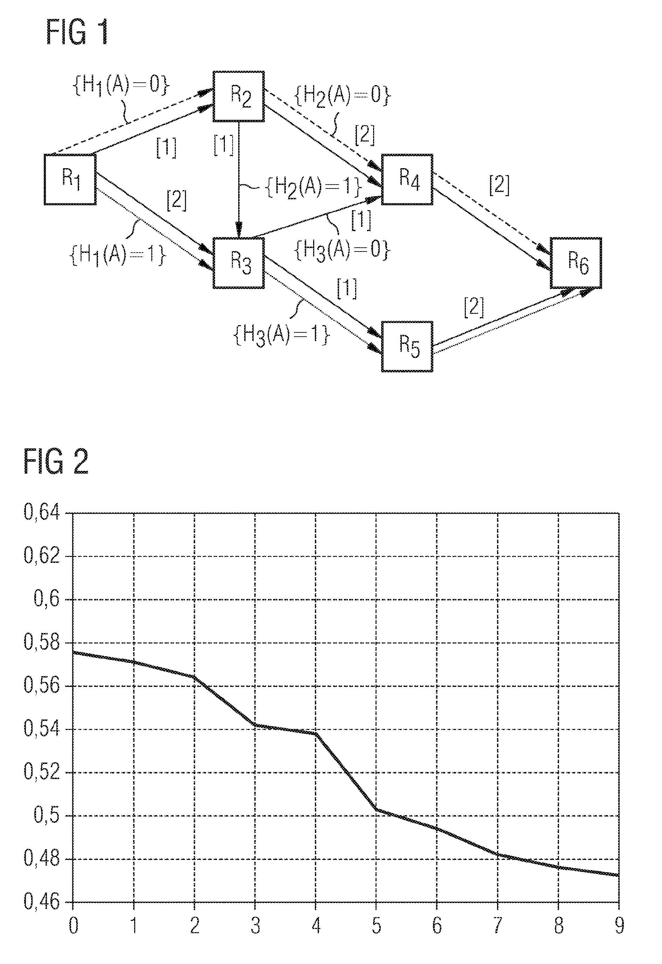

Figur 1 zeigt einen Ausschnitt aus einem paketvermittelnden Kommunikationsnetz, bestehend aus sechs Netzknoten bzw. Routern R1 bis R6, bei denen Netzknoten R1 über jeweils einen Verbindungsweg mit Netzknoten R2 und R3 verbunden ist. Netzknoten R2 wiederum über jeweils einen Verbindungsweg mit Netzknoten R3 und R4, Netzknoten R3 wiederum über jeweils einen Verbindungsweg mit Netzknoten R4 und R5 verbunden ist. Die Netzknoten R4 und R5 sind jeweils über einen Verbindungsweg mit dem Netzknoten R6 verbunden.

Anhand der Figur 1 wird im folgenden erläutert, wie Datenpakete mittels Hash-Funktion-Verfahren vom (Eingangs-) Netzknoten R1 zum (Ziel-) Netzknoten R6 weitergeleitet bzw. geroutet und aufgeteilt werden. Die Zahlen in eckigen Klammern stellen die in diesem Fall bidirektional zu verstehenden Kostenmetriken für die Verbindungswege respektive Links dar, für den Verbindungsweg zwischen Netzknoten R1 und R2 ist dies 1, für den Verbindungsweg zwischen Netzknoten R1 und R3 ist dies 2, für R2 - R3: 1, für R2 - R4: 2, für R3 - R4: 1, für R3 - R5: 1, für R4 - R6: 2 und für R5 - R6: 2. Die Angaben in geschweiften Klammern sollen darstellen, dass Netzknoten R1 ein Datenpaket mit der Adresskombination A zu Netzknoten R2 weiterleitet, wenn die Hash-Funktion H1 im Netzknoten R1 den Wert H1 von A = 0, d.h. H1(A)=0, liefert oder zu Netzknoten R3, wenn die Hash-Funktion H1 von A gleich 1, d.h. H1(A)=1, ist. Entsprechend leitet Netzknoten R2 ein Datenpaket mit der Hash-Funktion H2 von A = 0 zu Netzknoten R4 weiter und ein Paket mit der Hash-Funktion H2 von A = 1 zu Netzknoten R3 weiter. Der Netzknoten R3 leitet Pakete mit der Hash-Funktion H3 von A = 0 an Netzknoten R4 weiter und Pakete mit der Hash-Funktion H3 von A = 1 an Netzknoten R5. Die Netzknoten R4 und R5 sollen in diesem Beispiel die Datenpakete bzw. den Verkehr nicht weiter aufteilen und zu Netzknoten R6 weiterleiten.

Erfindungsgemäß wird vorgeschlagen, als Zielfunktion einer Optimierung, wie sie für das Finden günstiger Link-Kostenmetriken eingesetzt wird, die maximale relative Linkauslastung zu verwenden, die in einem beliebigen Fehlermuster aus einer Liste vorgegebener Fehlermuster beobachtet wird, und die Kostenmetriken für Multi-Path Routing zu optimieren.

Optionen
- Vorgabe der zu berücksichtigenden Fehlermuster
   - systematisch, z.B. als Kombination der Komponenten "kein Ausfall",
      "alle einzelnen Linkfehler", "alle doppelten Linkfehler", "alle Knotenfehler"
   - als Liste der zu betrachtenden Szenarien
- Gewichtung der für die o.g. Komponenten beobachteten maximalen Linklasten in einer Zielfunktion für die Optimierung
- Bestimmung der zu betrachtenden Szenarien z.B. aus Geschäftsbeziehungen, so dass die Verkehrsbeziehungen der wichtigsten Kunden besonders gut geschützt werden
- Besonderer Schutz wichtiger Verkehrswege oder häufiger ausfallender Links durch gezieltes Erzeugen von Mehrwege-Alternativen an der entsprechenden Stelle
- Einschluss nur solcher Linkfehler, die nicht auf der physikalischen Ebene (z.B. durch SONET/SDH) bereits abgefangen werden, in der Liste der zu berücksichtigenden Szenarien
- Wenn Router mit unterschiedlicher Verfügbarkeit eingesetzt werden:
   Einschluss nur derjenigen Router, die weniger verfügbar sind (z.B. weil nicht alle Komponenten gedoppelt sind), in die Liste der zu berücksichtigenden Knotenausfälle
- Automatische Auswahl der zu berücksichtigenden Ausfallkomponenten anhand von Langzeitbeobachtungen der Fehlerhäufigkeit im Netzbetrieb
- Automatische Auswahl der zu berücksichtigenden Ausfallkomponenten anhand von Informationen über vorhandene Ersatzwege aus dem Physical Layer (Transportnetz, z.B. Signalisier-Information aus ASON/ASTN automatically switched optical network bzw. automatically switched transport network)

## Patentansprüche

1. Verfahren zum Auffinden günstiger Link-Kostenmetriken in einem Datenpakete nach dem Internet-Protokoll übertragenden Netzwerk, das mit Netzknoten und diese verbindende Links gebildet ist
demzufolge
eine Liste vorgegebener Fehlermuster gegeben ist,
aus der Liste das Fehlermuster mit der maximalen relativen Linkauslastung ausgewählt wird und
hierfür die Kostenmetriken für Multi-Path Routing optimiert werden.

2. Verfahren nach Anspuch 1
**dadurch gekennzeichnet, dass**
die Liste das Fehlermuster einzelner Linkfehler enthält.

3. Verfahren einem der vorstehenden Ansprüche
**dadurch gekennzeichnet, dass**
die Liste das Fehlermuster doppelter Linkfehler enthält.

4. Verfahren einem der vorstehenden Ansprüche
**dadurch gekennzeichnet, dass**
die Liste das Fehlermuster Knotenfehler enthält.

5. Verfahren nach einem der vorstehenden Ansprüche
**dadurch gekennzeichnet, dass**
die Liste neben mindestens einem Fehlermuster das Muster keines Ausfalls enthält.

6. Verfahren nach einem der vorstehenden Ansprüche
**dadurch gekennzeichnet, dass**
die in der Liste enthaltenen maximalen relativen Linkauslastungen in einer Zielfunktion für die Optimierung gewichtet werden.

7. Verfahren nach einem der vorstehenden Ansprüche
**dadurch gekennzeichnet, dass**
die Fehlermuster im Hinblick auf die optimierte Performance des Netzes für einen besonderen Betriebsfall priorisiert werden.

8. Verfahren nach einem der vorstehenden Ansprüche
**dadurch gekennzeichnet, dass**,
insbesondere für kritische Stellen des Netzes, Mehrwege-Alternativen bereitgestellt werden.

9. Verfahren nach einem der vorstehenden Ansprüche
**dadurch gekennzeichnet, dass**
nur solche Linkfehler in der Liste berücksichtigt werden, die nicht auf der physikalischen Ebene bereits abgefangen werden.

10. Verfahren nach einem der vorstehenden Ansprüche
**dadurch gekennzeichnet, dass**
im Falle des Einsatzes von Router mit unterschiedlicher Verfügbarkeit in die Liste der zu berücksichtigenden Knotenausfälle nur solche Router aufgenommen werden, die weniger verfügbar sind.

11. Verfahren nach einem der vorstehenden Ansprüche
**dadurch gekennzeichnet, dass**
die Einträge in die Liste der Fehlermuster nach Maßgabe der zu berücksichtigenden Ausfallkomponenten anhand von Langzeitbeobachtungen der Fehlerhäufigkeit im Netzbetrieb ausgewählt werden.

12. Verfahren nach einem der vorstehenden Ansprüche
**dadurch gekennzeichnet, dass**
die Einträge in die Liste der Fehlermuster nach Maßgabe der zu berücksichtigenden Ausfallkomponenten anhand von Informationen über vorhandene Ersatzwege aus dem Physical Layer ausgewählt werden.
